# EUROPEAN PATENT APPLICATION

(11) **EP 4 838 840 A1**
(43) Date of publication of application: **11.11.2026**
(21) Application number: 26177293.3
(22) Date of filing: 07.05.2026
(51) Int. Cl.: H04L 12/28, H04L 61/5038, G05B 15/02

(54) **SYSTEM AND METHOD FOR ADDRESSING IN A MODULAR COMMUNICATION SYSTEM IN A BUILDING MANAGEMENT SYSTEM**

(30) Priority: 07.05.2025 WO PCT/CN2025/093178
(71) Applicant: Tyco Fire & Security GmbH, 8212 Neuhausen am Rheinfall (CH)
(72) Inventor: WANG, Cheng, Changning District, Shanghai, 200051 (CN); GU, Ruifeng, Changning District, Shanghai, 200335 (CN); MA, Jun, Wuxi, Jiangsu, 214028 (CN); WANG, Yanchao, Wuxi, Jiangsu, 214028 (CN); ZHOU, Duorong, Wuxi, Jiangsu, 214028 (CN)
(74) Representative: Meissner Bolte Nürnberg

(57) **Abstract**

A device for use in a building management system (BMS) is a communication system. An interface module can be provided. The interface module is for removable connection to a base device. The interface module includes a circuit configured to provide an address for the interface module. The circuit is configured to receive a first signal and provide the address in response to a characteristic of the first signal.

## Description

This application claims priority to PCT application CN2025/093178, filed 5/7/2025 including the specification, drawings, claims and abstract, is incorporated herein by reference in its entirety and assigned to Assignee of the present application.

The present disclosure relates generally to the field of communications systems and/or controllers, including but not limited to communication systems and controllers used in building management systems (BMSs) including but not limited to heating, ventilating, or air conditioning (HVAC) systems.

A BMS is, in general, a system of devices configured to control, monitor, and/or manage equipment in or around a building, buildings, or building area. A BMS can be or include, for example, an HVAC system, a security system, a lighting system, a fire alerting system, any other system that is capable of managing building functions or devices, and/or any combination thereof.

Some equipment that operates as part of a BMS may require different types of input/output (I/O) interfaces. For example, field controllers, communication modules, and input output modules (IOMs) in a BMS often have fixed point counts and types (i.e., eight binary inputs) that may not be needed depending on system configuration or applications. The provision of the fixed points on the controller, communication models or IOM adds to the cost of the controller, communication modules, or IOM. In addition, adding I/O interfaces for a particular application may require purchasing a different field controller, communication module, or IOM to obtain to the right fixed point count, type and/or mix of count and type for the application. The additional controllers, communication modules or IOMs add redundant circuitry including a power supply and communication interfaces for the system. Individual modules have addresses that allow modules to be uniquely addressed. The addresses are set using DIP switches, jumpers, or rotary switches which are expensive and require an operator to manipulate.

Embodiments according to the invention are disclosed in particular in the appended claims. One implementation of the present disclosure is a controller device in a building system. The device includes a base including a first processor and a base interface, and a first module installable on and removable from the base. The first processor is configured to provide control or communication operations for a device in the building system. The first module includes a first module interface for receiving power from and communicating with the base via the base interface. In some embodiments, the device includes an optional second module installable on and removable from the base or first module. The second module includes a second module interface for receiving power from and communicating with the base via the base interface. The first module includes an address generation circuit. The address generation circuit can be provided in the base.

Some embodiments relate to a building system. The building system includes equipment that affects or senses an environment within a building, and a controller or communication device. The controller or communication device includes a base including a first processor and a base interface. The first processor is configured to provide control or communication operations for a device in the building system. The controller or communication device also includes a first module installable on and removable from the base, the first module including a second processor and a first module interface for receiving power from and communicating with the base via the base interface. The first module includes pulse width modulated (PWM) signal generator for providing a signal indicative of an address to a second module.

Some embodiments relate to a method for monitoring or controlling a device in a building management system (BMS). The method includes providing a base comprising a first processor and a wireless base interface, the first processor being configured to provide control operations for a device in the building system. The method also includes installing a first module installable on the base, the first module comprising a terminal block and a first wireless module interface for receiving power from and communicating with the base via the wireless base interface and coupling the device to the terminal block. The first module includes an addressing circuit using a frequency keyed addressing scheme.

Some embodiments relate to an interface module for a communication system in a building system. The interface module is for removable connection to a base device. The interface module includes a circuit configured to provide an address for the interface module. The circuit is configured to receive a first signal and provide the address in response to a characteristic of the first signal.

In some embodiments, the interface module can be coupled to a second module and is installable on and removable from the second module. The second module includes a second module interface for communicating via the interface module. The interface module provides a second signal to the second module, and the second signal indicates an address for the second module. In some embodiments, the interface module can be coupled to a third module installable on and removable from the second module. The second module provides a third signal to the third module, and the third signal indicates an address for the third module.

In some embodiments, the characteristic includes frequency. In some embodiments, the characteristic includes a duty cycle. In some embodiments, the first signal is a pulse width modulated (PWM) signal in the 1-10 kilohertz range. In some embodiments, the circuit includes a memory storing the address with respect to the characteristic. In some embodiments, the circuit includes a signal generator for generating a second signal for indicating an address of a second module in response to receiving the first signal.

Some embodiments relate to a building system. The building system includes equipment that affects or senses an environment within a building and a communication device. The communication device includes a base including a first processor and a base interface. The first processor is configured to provide operations for the building system. The communication device also includes a first module installable on and removable from the base. The first module includes a circuit configured to provide an address for the first module. The circuit is configured to receive a first signal and provide the address in response to a characteristic of the first signal.

In some embodiments, the system also includes a second module. The first module is installable on and removable from the second module. The circuit provides a second signal to the second module. The second signal indicates an address for the second module in response to the first signal. In some embodiments, the system also includes a third module installable on and removable from the second module. The second module provides a third signal to the third module in response to the second signal, and the third signal indicates an address for the third module.

In some embodiments, the circuit includes a signal generator for generating a second signal for indicating an address of a second module in response to receiving the first signal. In some embodiments, the first signal is a pulse width modulated (PWM) signal in the 1-10 kilohertz range, and the characteristic includes duty cycle or frequency. In some embodiments, the circuit includes a memory storing the address with respect to the characteristic. In some embodiments, the base is a communication module.

Some embodiments relate to a method for use in a building management system (BMS). The method includes receiving power and ground signals by an interface module for removable connection to a base device from the base device. The method also includes receiving a first signal by the interface module, and assigning an address by the interface module for the interface module in response to a characteristic of the first signal.

In some embodiments, the method also includes providing a second signal from the interface module to a second module for removable connection to the interface module in response to the first signal. The method also includes assigning an address by the second module in response to a characteristic of the second signal.

In some embodiments, the base device is a communication module and the interface module is an input output module. In some embodiments, the first signal is a pulse width modulated signal in the 1-10 kilohertz range, and the characteristic of the first signal comprises duty cycle or frequency.

In some embodiments, the method also includes providing a second signal from the interface module to a second module for removable connection to the interface module in response to the first signal. In some embodiments, the method also includes assigning the address by the second module for the second module in response to a characteristic of the second signal, providing a third signal from the second module to a third interface module for removable connection to the second module in response to the second signal, and assigning an address by the third module for the third module in response to a characteristic of the third signal.

The term controller as used herein is intended to include IOMs. An analog IOM refers to an IOM that is configured to provide or receive an analog signal. In some embodiments, the address generation refers to a pulse width modulated (PWM) signal generation circuit.

### BRIEF DESCRIPTION OF THE DRAWINGS

The disclosure will become more fully understood from the following detailed description, taken in conjunction with the accompanying figures, further characterized in that like reference numerals refer to like elements, in which:
FIG. 1 is a schematic drawing of a building equipped with a building management system (BMS) with an HVAC system, according to some embodiments.
FIG. 2 is a schematic of a waterside system which can be used as part of the HVAC system of FIG. 1, according to some embodiments.
FIG. 3 is a block diagram of an airside system which can be used as part of the HVAC system of FIG. 1, according to some embodiments.
FIG. 4 is a block diagram of a BMS which can be used in the building of FIG. 1, according to some embodiments.
FIG. 5 is a schematic perspective view drawing of an example communication system associated with the BMS of FIG. 4, according to some embodiments.
FIG. 6 is another schematic perspective view drawing of the example communication system of FIG. 5, according to some embodiments.
FIG. 7 is a schematic perspective view drawing of an example module with an addressing circuit for the communication system of FIG. 5, according to some embodiments.
FIG. 8 is a more detailed block diagram of the addressing circuit for the module illustrated in FIG. 7, according to some embodiments.
FIG. 9 is a general block diagram of an example communication system associated with the BMS of FIG. 4 including addressing circuitry, according to some embodiments.
FIG. 10 is a flow diagram showing the addressing operation for the communication systems illustrated in FIGS. 5 and 9, according to some embodiments.

### DETAILED DESCRIPTION

### Overview

Referring generally to the FIGURES, a communication system with or without an optional controller has a front footprint of the product that is reduce by approximately 40% from conventional systems, thereby making the front size more compact, in some embodiments. In some embodiments, a communication system with or without an optional controller allows customers to use smaller installation boxes, resulting in material cost savings, control panel size reduction (e.g., 40%) and total material savings (e.g., product and panel together of 19.9%). In some embodiments, integration of modules for the communication system provides an aesthetically pleasing product appearance, provides brand consistency, and effective management of production costs. In some embodiments, the system has a rugged design that enhances cost efficiency while redefining the cluttered layouts of conventional systems

In some embodiments, the communication system has a sleek, modular design with stackable, detachable and re-attachable units. The modular design can be characterized by robust enclosures, clean lines, and color-coded interfaces in some embodiments. In some embodiments, the modular design has an industrial-inspired appearance that stands in stark contrast to the bulky, fixed-box design of conventional building IO controllers, offering a modem, flexible visual identity.

In some embodiments, the communication system has an intuitive panel design with smooth, functional lines, integrating software-driven precision for efficient installation (e.g., 11% savings in AHU control, 6.6% in chilled water control). The system has an aesthetic that reflects advanced building automation system (BAS) innovation and user-friendly operation. In some embodiments, the communication system can include any number of input output (IO) modules (e.g., four IO modules (8 analog outputs, 8 digital outputs, 16 digital input, and 16 universal or analog input modules). The IO modules share the same molding, thereby reducing production costs. In some embodiments, a controller module can be included which shares the same molding or housing.

The modular input/output (IO) interface architecture and associated controllers, communication module, and/or IOMs provide a versatile system. In some embodiments, the modularity advantageously reduces the number of different types of controllers and IOMs required by an application and allows for flexibility of configuring and commissioning site-specific I/O based on needs, thereby efficiently using time and reducing waste at the factory and in the field. The modular architecture allows for controllers, communication modules, and IOMs to be equipped for a particular BMS or HAVC system without requiring overly expensive hardware and/or software in some embodiments. In some embodiments, the system is configured to be attached to a DIN rail where each module slidably attaches to each other and engages a DIN rail.

In some embodiments, a modular I/O solution with integral terminal blocks or modules allows dynamic factory and field configuration of point counts and types. In some embodiments,. Each module is self-encapsulated for environmental protection and safe handling in the field, and has connectors on its planar side for connection (e.g., eight power, ground and communication connectors/terminals) to other modules in some embodiments.

In some embodiments, the communication module uses an advantageous addressing scheme. The addressing scheme assigns addresses to individual modules (or components) within a system in some embodiments. The addresses define how modules are uniquely identified and communicate with each other and other devices. A modular system that includes one or more IOMS uses addressing to organize communication, control, and data flow. In some embodiments, the communication module has an address set by using DIP switches, jumpers, or rotary switches, and the modules assign addresses to themselves using a PWM signal scheme. The addresses are set via software (e.g., during set up) in some embodiments. The addresses can be set according to bus systems like I²C, CAN, or Modbus, RS 485, BACNet, MSTP, etc., where each IOM has a unique address within the network in some embodiments.

In some embodiments, the modular IO solution advantageously identifies connected IOM addresses without DIP switches in some embodiments. In some embodiment, an IO manager is provided using at least one tool running in a Windows/PC that connects to multiple hardware communication modules, configures the communication module/IOM input/output type, monitors communication modules/IOM input and output values, and supports IOM firmware upgrades. Addresses for the IOMS can be auto assigned. In some embodiments, a PWM signal used to set the addresses based upon a characteristic of the PWM signal (e.g., frequency).

### Building Management System and HVAC System

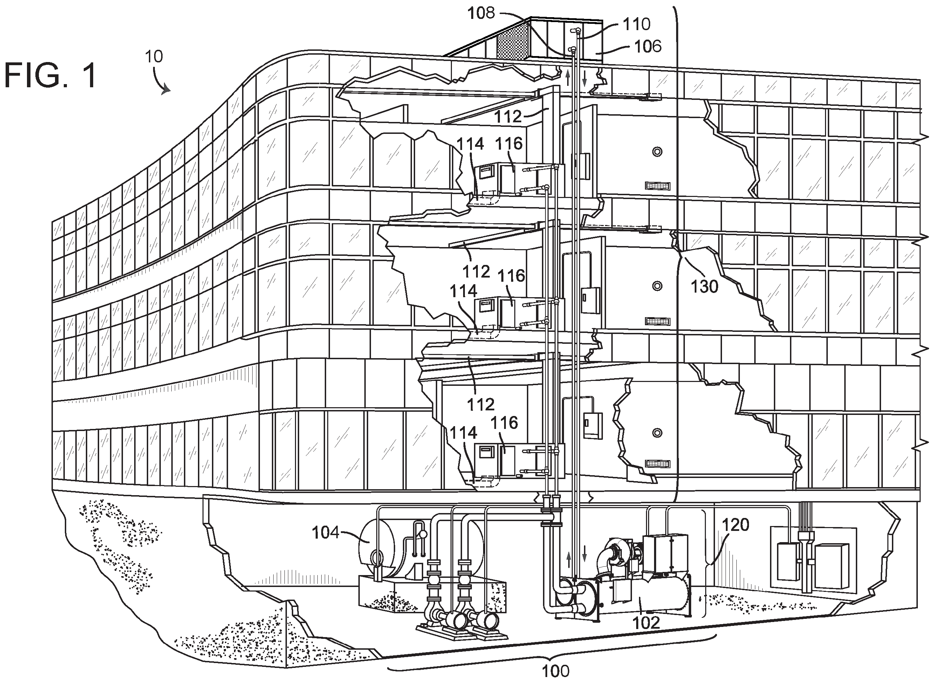

Referring now to FIGS. 1-4, an example building management system (BMS) and HVAC system in which the systems and methods of the present disclosure can be implemented are shown, according to an example embodiment. Referring particularly to FIG. 1, a perspective view of a building 10 is shown. Building 10 is served by a BMS. A BMS is, in general, a system of devices configured to control, monitor, and manage equipment in or around a building or building area. A BMS can include, for example, a HVAC system, a security system, a lighting system, and a fire alerting system, any other system that is capable of managing building functions or devices, or any combination thereof.

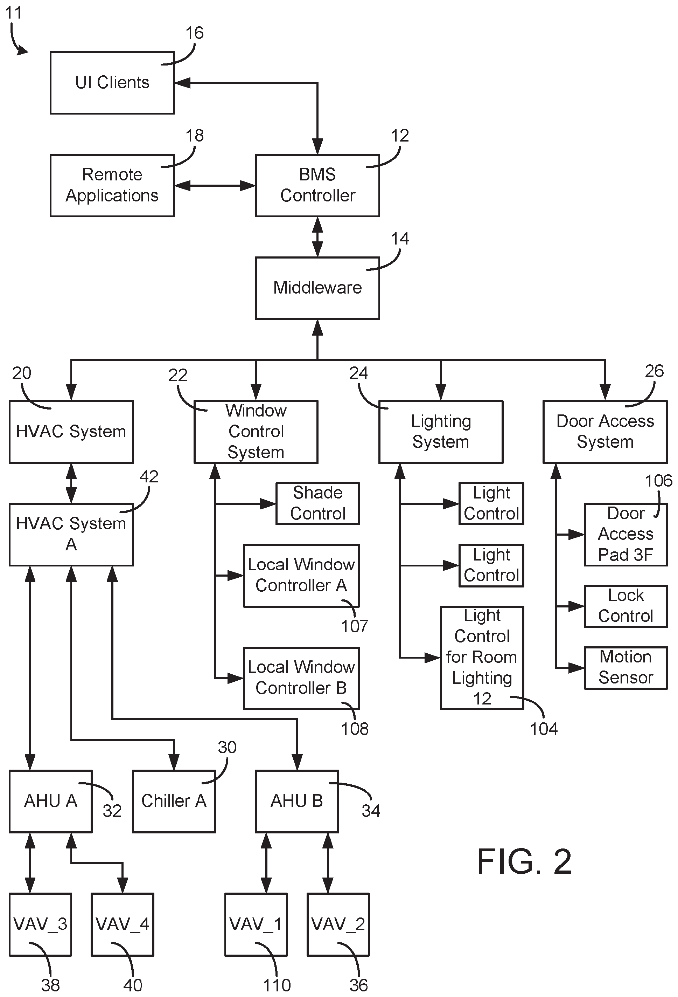

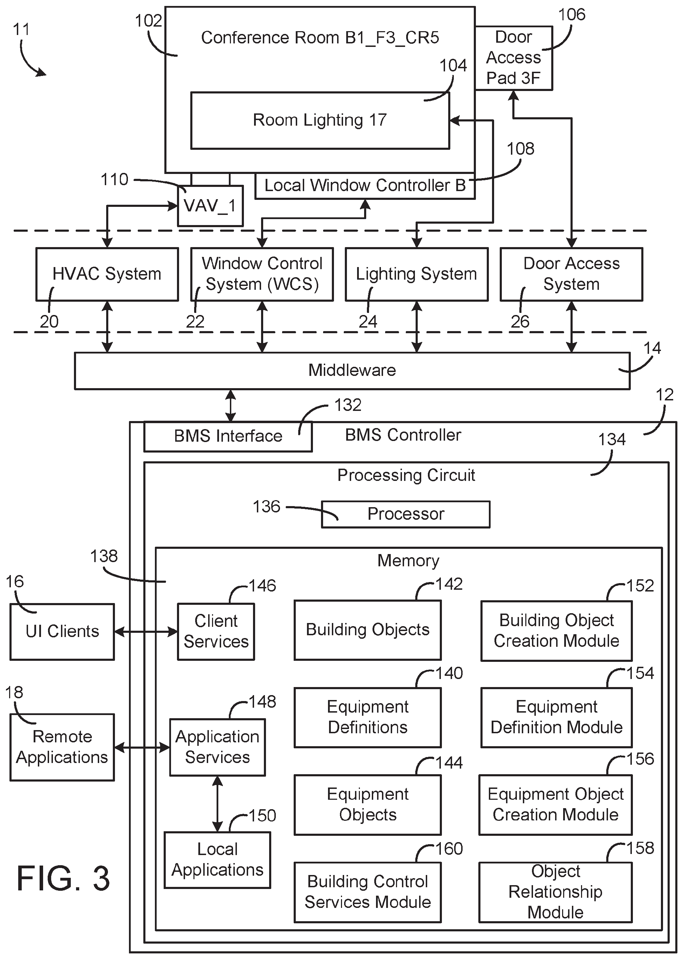

The BMS that serves building 10 includes an HVAC system 100. HVAC system 100 can include a plurality of HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 can provide a heated or chilled fluid to an air handling unit of airside system 130. Airside system 130 can use the heated or chilled fluid to heat or cool an airflow provided to building 10. An example waterside system and airside system which can be used in HVAC system 100 are described in greater detail with reference to FIGS. 2 and 3.

HVAC system 100 is shown to include a chiller 102, a boiler 104, and a rooftop air handling unit (AHU) 106. Waterside system 120 can use boiler 104 and chiller 102 to heat or cool a working fluid (e.g., water, glycol, etc.) and can circulate the working fluid to AHU 106. In various embodiments, the HVAC devices of waterside system 120 can be located in or around building 10 (as shown in FIG. 1) or at an offsite location such as a central plant (e.g., a chiller plant, a steam plant, a heat plant, etc.). The working fluid can be heated in boiler 104 or cooled in chiller 102, depending on whether heating or cooling is required in building 10. Boiler 104 can add heat to the circulated fluid, for example, by burning a combustible material (e.g., natural gas) or using an electric heating element. Chiller 102 can place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 can be transported to AHU 106 via piping 108.

AHU 106 can place the working fluid in a heat exchange relationship with an airflow passing through AHU 106 (e.g., via one or more stages of cooling coils and/or heating coils). The airflow can be, for example, outside air, return air from within building 10, or a combination of both. AHU 106 can transfer heat between the airflow and the working fluid to provide heating or cooling for the airflow. For example, AHU 106 can include one or more fans or blowers configured to pass the airflow over or through a heat exchanger containing the working fluid. The working fluid can then return to chiller 102 or boiler 104 via piping 110.

Airside system 130 can deliver the airflow supplied by AHU 106 (i.e., the supply airflow) to building 10 via air supply ducts 112 and can provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 can include dampers or other flow control elements that can be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 can include various sensors (e.g., temperature sensors, pressure sensors, etc.) configured to measure attributes of the supply airflow. AHU 106 can receive input from sensors located within AHU 106 and/or within the building zone and can adjust the flow rate, temperature, or other attributes of the supply airflow through AHU 106 to achieve setpoint conditions for the building zone.

Referring now to FIG. 2, a block diagram of a waterside system 200 is shown, according to an example embodiment. In various embodiments, waterside system 200 can supplement or replace waterside system 120 in HVAC system 100 or can be implemented separate from HVAC system 100. When implemented in HVAC system 100, waterside system 200 can include a subset of the HVAC devices in HVAC system 100 (e.g., boiler 104, chiller 102, pumps, valves, etc.) and can operate to supply a heated or chilled fluid to AHU 106. The HVAC devices of waterside system 200 can be located within building 10 (e.g., as components of waterside system 120) or at an offsite location such as a central plant.

In FIG. 2, waterside system 200 is shown as a central plant having a plurality of subplants 202-212. Subplants 202-212 are shown to include a heater subplant 202, a heat recovery chiller subplant 204, a chiller subplant 206, a cooling tower subplant 208, a hot thermal energy storage (TES) subplant 210, and a cold thermal energy storage (TES) subplant 212. Subplants 202-212 consume resources (e.g., water, natural gas, electricity, etc.) from utilities to serve the thermal energy loads (e.g., hot water, cold water, heating, cooling, etc.) of a building or campus. For example, heater subplant 202 can be configured to heat water in a hot water loop 214 that circulates the hot water between heater subplant 202 and building 10. Chiller subplant 206 can be configured to chill water in a cold water loop 216 that circulates the cold water between chiller subplant 206 and building 10. Heat recovery chiller subplant 204 can be configured to transfer heat from cold water loop 216 to hot water loop 214 to provide additional heating for the hot water and additional cooling for the cold water. Condenser water loop 218 can absorb heat from the cold water in chiller subplant 206 and reject the absorbed heat in cooling tower subplant 208 or transfer the absorbed heat to hot water loop 214. Hot TES subplant 210 and cold TES subplant 212 can store hot and cold thermal energy, respectively, for subsequent use.

Hot water loop 214 and cold water loop 216 can deliver the heated and/or chilled water to air handlers located on the rooftop of building 10 (e.g., AHU 106) or to individual floors or zones of building 10 (e.g., VAV units 116). The air handlers push air past heat exchangers (e.g., heating coils or cooling coils) through which the water flows to provide heating or cooling for the air. The heated or cooled air can be delivered to individual zones of building 10 to serve the thermal energy loads of building 10. The water then returns to subplants 202-212 to receive further heating or cooling.

Although subplants 202-212 are shown and described as heating and cooling water for circulation to a building, it is understood that any other type of working fluid (e.g., glycol, CO2, etc.) can be used in place of or in addition to water to serve the thermal energy loads. In other embodiments, subplants 202-212 can provide heating and/or cooling directly to the building or campus without requiring an intermediate heat transfer fluid. These and other variations to waterside system 200 are within the teachings of the present invention.

Each of subplants 202-212 can include a variety of equipment configured to facilitate the functions of the subplant. For example, heater subplant 202 is shown to include a plurality of heating elements 220 (e.g., boilers, electric heaters, etc.) configured to add heat to the hot water in hot water loop 214. Heater subplant 202 is also shown to include several pumps 222 and 224 configured to circulate the hot water in hot water loop 214 and to control the flow rate of the hot water through individual heating elements 220. Chiller subplant 206 is shown to include a plurality of chillers 232 configured to remove heat from the cold water in cold water loop 216. Chiller subplant 206 is also shown to include several pumps 234 and 236 configured to circulate the cold water in cold water loop 216 and to control the flow rate of the cold water through individual chillers 232.

Heat recovery chiller subplant 204 is shown to include a plurality of heat recovery heat exchangers 226 (e.g., refrigeration circuits) configured to transfer heat from cold water loop 216 to hot water loop 214. Heat recovery chiller subplant 204 is also shown to include several pumps 228 and 230 configured to circulate the hot water and/or cold water through heat recovery heat exchangers 226 and to control the flow rate of the water through individual heat recovery heat exchangers 226. Cooling tower subplant 208 is shown to include a plurality of cooling towers 238 configured to remove heat from the condenser water in condenser water loop 218. Cooling tower subplant 208 is also shown to include several pumps 240 configured to circulate the condenser water in condenser water loop 218 and to control the flow rate of the condenser water through individual cooling towers 238.

Hot TES subplant 210 is shown to include a hot TES tank 242 configured to store the hot water for later use. Hot TES subplant 210 can also include one or more pumps or valves configured to control the flow rate of the hot water into or out of hot TES tank 242. Cold TES subplant 212 is shown to include cold TES tanks 244 configured to store the cold water for later use. Cold TES subplant 212 can also include one or more pumps or valves configured to control the flow rate of the cold water into or out of cold TES tanks 244.

In some embodiments, one or more of the pumps in waterside system 200 (e.g., pumps 222, 224, 228, 230, 234, 236, and/or 240) or pipelines in waterside system 200 include an isolation valve associated therewith. Isolation valves can be integrated with the pumps or positioned upstream or downstream of the pumps to control the fluid flows in waterside system 200. In various embodiments, waterside system 200 can include more, fewer, or different types of devices and/or subplants based on the particular configuration of waterside system 200 and the types of loads served by waterside system 200.

Referring now to FIG. 3, a block diagram of an airside system 300 is shown, according to an example embodiment. In various embodiments, airside system 300 can supplement or replace airside system 130 in HVAC system 100 or can be implemented separate from HVAC system 100. When implemented in HVAC system 100, airside system 300 can include a subset of the HVAC devices in HVAC system 100 (e.g., AHU 106, VAV units 116, duct 112, duct 114, fans, dampers, etc.) and can be located in or around building 10. Airside system 300 can operate to heat or cool an airflow provided to building 10 using a heated or chilled fluid provided by waterside system 200.

In FIG. 3, airside system 300 is shown to include an economizer-type air handling unit (AHU) 302. Economizer-type AHUs vary the amount of outside air and return air used by the air handling unit for heating or cooling. For example, AHU 302 can receive return air 304 from building zone 306 via return air duct 308 and can deliver supply air 310 to building zone 306 via supply air duct 312. In some embodiments, AHU 302 is a rooftop unit located on the roof of building 10 (e.g., AHU 106 as shown in FIG. 1) or otherwise positioned to receive both return air 304 and outside air 314. AHU 302 can be configured to operate exhaust air damper 316, mixing damper 318, and outside air damper 320 to control an amount of outside air 314 and return air 304 that combine to form supply air 310. Any return air 304 that does not pass through mixing damper 318 can be exhausted from AHU 302 through exhaust damper 316 as exhaust air 322.

Each of dampers 316-320 can be operated by an actuator. For example, exhaust air damper 316 can be operated by actuator 324, mixing damper 318 can be operated by actuator 326, and outside air damper 320 can be operated by actuator 328. Actuators 324-328 can communicate with an AHU controller 330 via a communications link 332. Actuators 324-328 can receive control signals from AHU controller 330 and can provide feedback signals to AHU controller 330. Feedback signals can include, for example, an indication of a current actuator or damper position, an amount of torque or force exerted by the actuator, diagnostic information (e.g., results of diagnostic tests performed by actuators 324-328), status information, commissioning information, configuration settings, calibration data, and/or other types of information or data that can be collected, stored, or used by actuators 324-328. AHU controller 330 can be an economizer controller configured to use one or more control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control actuators 324-328.

Still referring to FIG. 3, AHU 302 is shown to include a cooling coil 334, a heating coil 336, and a fan 338 positioned within supply air duct 312. Fan 338 can be configured to force supply air 310 through cooling coil 334 and/or heating coil 336 and provide supply air 310 to building zone 306. AHU controller 330 can communicate with fan 338 via communications link 340 to control a flow rate of supply air 310. In some embodiments, AHU controller 330 controls an amount of heating or cooling applied to supply air 310 by modulating a speed of fan 338.

Cooling coil 334 can receive a chilled fluid from waterside system 200 (e.g., from cold water loop 216) via piping 342 and can return the chilled fluid to waterside system 200 via piping 344. Valve 346 can be positioned along piping 342 or piping 344 to control a flow rate of the chilled fluid through cooling coil 334. In some embodiments, cooling coil 334 includes multiple stages of cooling coils that can be independently activated and deactivated (e.g., by AHU controller 330, by BMS controller 366, etc.) to modulate an amount of cooling applied to supply air 310.

Heating coil 336 can receive a heated fluid from waterside system 200 (e.g., from hot water loop 214) via piping 348 and can return the heated fluid to waterside system 200 via piping 350. Valve 352 can be positioned along piping 348 or piping 350 to control a flow rate of the heated fluid through heating coil 336. In some embodiments, heating coil 336 includes multiple stages of heating coils that can be independently activated and deactivated (e.g., by AHU controller 330, by BMS controller 366, etc.) to modulate an amount of heating applied to supply air 310.

Each of valves 346 and 352 can be controlled by an actuator. For example, valve 346 can be controlled by actuator 354 and valve 352 can be controlled by actuator 356. Actuators 354-356 can communicate with AHU controller 330 via communications links 358-360. Actuators 354-356 can receive control signals from AHU controller 330 and can provide feedback signals to controller 330. In some embodiments, AHU controller 330 receives a measurement of the supply air temperature from a temperature sensor 362 positioned in supply air duct 312 (e.g., downstream of cooling coil 334 and/or heating coil 336). AHU controller 330 can also receive a measurement of the temperature of building zone 306 from a temperature sensor 364 located in building zone 306.

In some embodiments, AHU controller 330 operates valves 346 and 352 via actuators 354-356 to modulate an amount of heating or cooling provided to supply air 310 (e.g., to achieve a setpoint temperature for supply air 310 or to maintain the temperature of supply air 310 within a setpoint temperature range). The positions of valves 346 and 352 affect the amount of heating or cooling provided to supply air 310 by cooling coil 334 or heating coil 336 and may correlate with the amount of energy consumed to achieve a desired supply air temperature. AHU controller 330 can control the temperature of supply air 310 and/or building zone 306 by activating or deactivating coils 334-336, adjusting a speed of fan 338, or a combination of both.

Still referring to FIG. 3, airside system 300 is shown to include a building management system (BMS) controller 366 and a client device 368. BMS controller 366 can include one or more computer systems (e.g., servers, supervisory controllers, subsystem controllers, etc.) that serve as system level controllers, application or data servers, head nodes, or master controllers for airside system 300, waterside system 200, HVAC system 100, and/or other controllable systems that serve building 10. BMS controller 366 can communicate with multiple downstream building systems or subsystems (e.g., HVAC system 100, a security system, a lighting system, waterside system 200, etc.) via a communications link 370 according to like or disparate protocols (e.g., LON, BACnet, etc.). In various embodiments, AHU controller 330 and BMS controller 366 can be separate (as shown in FIG. 3) or integrated. In an integrated implementation, AHU controller 330 can be a software module configured for execution by a processor of BMS controller 366.

In some embodiments, AHU controller 330 receives information from BMS controller 366 (e.g., commands, setpoints, operating boundaries, etc.) and provides information to BMS controller 366 (e.g., temperature measurements, valve or actuator positions, operating statuses, diagnostics, etc.). For example, AHU controller 330 can provide BMS controller 366 with temperature measurements from temperature sensors 362 and 364, equipment on/off states, equipment operating capacities, and/or any other information that can be used by BMS controller 366 to monitor or control a variable state or condition within building zone 306.

Client device 368 can include one or more human-machine interfaces or client interfaces (e.g., graphical user interfaces, reporting interfaces, text-based computer interfaces, client-facing web services, web servers that provide pages to web clients, etc.) for controlling, viewing, or otherwise interacting with HVAC system 100, its subsystems, and/or devices. Client device 368 can be a computer workstation, a client terminal, a remote or local interface, or any other type of user interface device. Client device 368 can be a stationary terminal or a mobile device. For example, client device 368 can be a desktop computer, a computer server with a user interface, a laptop computer, a tablet, a smartphone, a PDA, or any other type of mobile or non-mobile device. Client device 368 can communicate with BMS controller 366 and/or AHU controller 330 via communications link 372.

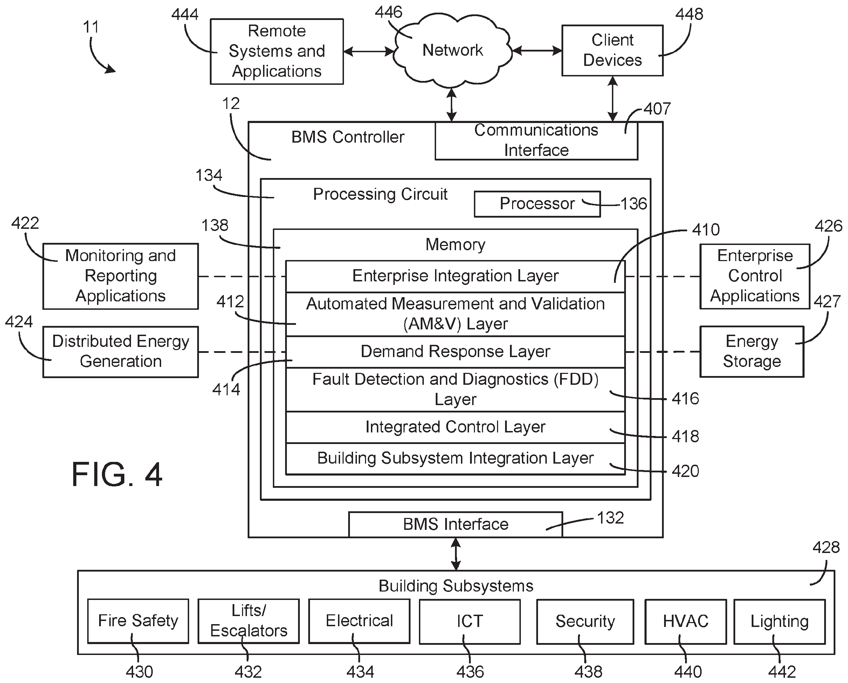

Referring now to FIG. 4, a block diagram of a building management system (BMS) 400 is shown, according to an example embodiment. BMS 400 can be implemented in building 10 to automatically monitor and control various building functions. BMS 400 is shown to include BMS controller 366 and a plurality of building subsystems 428. Building subsystems 428 are shown to include a building electrical subsystem 434, an information communication technology (ICT) subsystem 436, a security subsystem 438, a HVAC subsystem 440, a lighting subsystem 442, a lift/escalators subsystem 432, and a fire safety subsystem 430. In various embodiments, building subsystems 428 can include fewer, additional, or alternative subsystems. For example, building subsystems 428 can also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 428 include waterside system 200 and/or airside system 300, as described with reference to FIGS. 2 and 3.

Each of building subsystems 428 can include any number of devices, controllers, and connections for completing its individual functions and control activities. HVAC subsystem 440 can include many of the same components as HVAC system 100, as described with reference to FIGS. 1-3. For example, HVAC subsystem 440 can include a chiller, a boiler, any number of air handling units, economizers, field controllers, supervisory controllers, actuators, temperature sensors, and other devices for controlling the temperature, humidity, airflow, or other variable conditions within building 10. Lighting subsystem 442 can include any number of light fixtures, ballasts, lighting sensors, dimmers, or other devices configured to controllably adjust the amount of light provided to a building space. Security subsystem 438 can include occupancy sensors, video surveillance cameras, digital video recorders, video processing servers, intrusion detection devices, access control devices (e.g., card access, etc.) and servers, or other security-related devices.

Still referring to FIG. 4, BMS controller 366 is shown to include a communications interface 407 and a BMS interface 409. Interface 407 can facilitate communications between BMS controller 366 and external applications (e.g., monitoring and reporting applications 422, enterprise control applications 426, remote systems and applications 444, applications residing on client devices 448, etc.) for allowing user control, monitoring, and adjustment to BMS controller 366 and/or subsystems 428. Interface 407 can also facilitate communications between BMS controller 366 and client devices 448. BMS interface 409 can facilitate communications between BMS controller 366 and building subsystems 428 (e.g., HVAC, lighting security, lifts, power distribution, business, etc.). In some embodiments, BMS controller 366 can be an IOM or controller such as a thermostat, an AHU controller, an IOM, a valve controller, an enterprise manager, a field controller, RTU controller, heat pump controller, chiller controller, boiler controller, VAV controller, a fan coil unit controller, a security controller, a lighting controllers, an edge controller, fire system controller, or other BMS control device and has a modular architecture as described herein.

Interfaces 407, 409 can be or include wired or wireless communications interfaces (e.g., jacks, antennas, transmitters, receivers, transceivers, wire terminals, etc.) for conducting data communications with building subsystems 428 or other external systems or devices. In various embodiments, communications via interfaces 407, 409 can be direct (e.g., local wired or wireless communications) or via a communications network 446 (e.g., a WAN, the Internet, a cellular network, etc.). For example, interfaces 407, 409 can include an Ethernet card and port for sending and receiving data via an Ethernet-based communications link or network. In another example, interfaces 407, 409 can include a Wi-Fi transceiver for communicating via a wireless communications network. In another example, one or both of interfaces 407, 409 can include cellular or mobile phone communications transceivers. In one embodiment, communications interface 407 is a power line communications interface and BMS interface 409 is an Ethernet interface. In other embodiments, both communications interface 407 and BMS interface 409 are Ethernet interfaces or are the same Ethernet interface.

Still referring to FIG. 4, BMS controller 366 is shown to include a processing circuit 404 including a processor 406 and memory 408. Processing circuit 404 can be communicably connected to BMS interface 409 and/or communications interface 407 such that processing circuit 404 and the various components thereof can send and receive data via interfaces 407, 409. Processor 406 can be implemented as a general purpose processor, an application specific integrated circuit (ASIC), one or more field programmable gate arrays (FPGAs), a group of processing components, or other suitable electronic processing components.

Memory 408 (e.g., memory, memory unit, storage device, etc.) can include one or more devices (e.g., RAM, ROM, Flash memory, hard disk storage, etc.) for storing data and/or computer code for completing or facilitating the various processes, layers and modules described in the present application. Memory 408 can be or include volatile memory or non-volatile memory. Memory 408 can include database components, object code components, script components, or any other type of information structure for supporting the various activities and information structures described in the present application. According to an example embodiment, memory 408 is communicably connected to processor 406 via processing circuit 404 and includes computer code for executing (e.g., by processing circuit 404 and/or processor 406) one or more processes described herein.

In some embodiments, BMS controller 366 is implemented within a single computer (e.g., one server, one housing, etc.). In various other embodiments BMS controller 366 can be distributed across multiple servers or computers (e.g., that can exist in distributed locations). Further, while FIG. 4 shows applications 422 and 426 as existing outside of BMS controller 366, in some embodiments, applications 422 and 426 can be hosted within BMS controller 366 (e.g., within memory 408).

Still referring to FIG. 4, memory 408 is shown to include an enterprise integration layer 410, an automated measurement and validation (AM&V) layer 412, a demand response (DR) layer 414, a fault detection and diagnostics (FDD) layer 416, an integrated control layer 418, and a building subsystem integration later 420. Layers 410-420 can be configured to receive inputs from building subsystems 428 and other data sources, determine optimal control actions for building subsystems 428 based on the inputs, generate control signals based on the optimal control actions, and provide the generated control signals to building subsystems 428. The following paragraphs describe some of the general functions performed by each of layers 410-420 in BMS 400.

Enterprise integration layer 410 can be configured to serve clients or local applications with information and services to support a variety of enterprise-level applications. For example, enterprise control applications 426 can be configured to provide subsystem-spanning control to a graphical user interface (GUI) or to any number of enterprise-level business applications (e.g., accounting systems, user identification systems, etc.). Enterprise control applications 426 can also or alternatively be configured to provide configuration GUIs for configuring BMS controller 366. In yet other embodiments, enterprise control applications 426 can work with layers 410-420 to optimize building performance (e.g., efficiency, energy use, comfort, or safety) based on inputs received at interface 407 and/or BMS interface 409.

Building subsystem integration layer 420 can be configured to manage communications between BMS controller 366 and building subsystems 428. For example, building subsystem integration layer 420 can receive sensor data and input signals from building subsystems 428 and provide output data and control signals to building subsystems 428. Building subsystem integration layer 420 can also be configured to manage communications between building subsystems 428. Building subsystem integration layer 420 translate communications (e.g., sensor data, input signals, output signals, etc.) across a plurality of multi-vendor/multi-protocol systems.

Demand response layer 414 can be configured to optimize resource usage (e.g., electricity use, natural gas use, water use, etc.) and/or the monetary cost of such resource usage in response to satisfy the demand of building 10. The optimization can be based on time-of-use prices, curtailment signals, energy availability, or other data received from utility providers, distributed energy generation systems 424, from energy storage 427 (e.g., hot TES 242, cold TES 244, etc.), or from other sources. Demand response layer 414 can receive inputs from other layers of BMS controller 366 (e.g., building subsystem integration layer 420, integrated control layer 418, etc.). The inputs received from other layers can include environmental or sensor inputs such as temperature, carbon dioxide levels, relative humidity levels, air quality sensor outputs, occupancy sensor outputs, room schedules, and the like. The inputs can also include inputs such as electrical use (e.g., expressed in kWh), thermal load measurements, pricing information, projected pricing, smoothed pricing, curtailment signals from utilities, and the like.

According to an example embodiment, demand response layer 414 includes control logic for responding to the data and signals it receives. These responses can include communicating with the control algorithms in integrated control layer 418, changing control strategies, changing setpoints, or activating/deactivating building equipment or subsystems in a controlled manner. Demand response layer 414 can also include control logic configured to determine when to utilize stored energy. For example, demand response layer 414 can determine to begin using energy from energy storage 427 just prior to the beginning of a peak use hour.

In some embodiments, demand response layer 414 includes a control module configured to actively initiate control actions (e.g., automatically changing setpoints) which minimize energy costs based on one or more inputs representative of or based on demand (e.g., price, a curtailment signal, a demand level, etc.). In some embodiments, demand response layer 414 uses equipment models to determine an optimal set of control actions. The equipment models can include, for example, thermodynamic models describing the inputs, outputs, and/or functions performed by various sets of building equipment. Equipment models can represent collections of building equipment (e.g., subplants, chiller arrays, etc.) or individual devices (e.g., individual chillers, heaters, pumps, etc.).

Demand response layer 414 can further include or draw upon one or more demand response policy definitions (e.g., databases, XML files, etc.). The policy definitions can be edited or adjusted by a user (e.g., via a graphical user interface) so that the control actions initiated in response to demand inputs can be tailored for the user's application, desired comfort level, particular building equipment, or based on other concerns. For example, the demand response policy definitions can specify which equipment can be turned on or off in response to particular demand inputs, how long a system or piece of equipment should be turned off, what setpoints can be changed, what the allowable set point adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and when to dispatch on-site generation of energy (e.g., via fuel cells, a motor generator set, etc.).

Integrated control layer 418 can be configured to use the data input or output of building subsystem integration layer 420 and/or demand response later 414 to make control decisions. Due to the subsystem integration provided by building subsystem integration layer 420, integrated control layer 418 can integrate control activities of the subsystems 428 such that the subsystems 428 behave as a single integrated super system. In an example embodiment, integrated control layer 418 includes control logic that uses inputs and outputs from a plurality of building subsystems to provide greater comfort and energy savings relative to the comfort and energy savings that separate subsystems could provide alone. For example, integrated control layer 418 can be configured to use an input from a first subsystem to make an energy-saving control decision for a second subsystem. Results of these decisions can be communicated back to building subsystem integration layer 420.

Integrated control layer 418 is shown to be logically below demand response layer 414. Integrated control layer 418 can be configured to enhance the effectiveness of demand response layer 414 by enabling building subsystems 428 and their respective control loops to be controlled in coordination with demand response layer 414. This configuration may advantageously reduce disruptive demand response behavior relative to conventional systems. For example, integrated control layer 418 can be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller.

Integrated control layer 418 can be configured to provide feedback to demand response layer 414 so that demand response layer 414 checks that constraints (e.g., temperature, lighting levels, etc.) are properly maintained even while demanded load shedding is in progress. The constraints can also include setpoint or sensed boundaries relating to safety, equipment operating limits and performance, comfort, fire codes, electrical codes, energy codes, and the like. Integrated control layer 418 is also logically below fault detection and diagnostics layer 416 and automated measurement and validation layer 412. Integrated control layer 418 can be configured to provide calculated inputs (e.g., aggregations) to these higher levels based on outputs from more than one building subsystem.

Automated measurement and validation (AM&V) layer 412 can be configured to verify that control strategies commanded by integrated control layer 418 or demand response layer 414 are working properly (e.g., using data aggregated by AM&V layer 412, integrated control layer 418, building subsystem integration layer 420, FDD layer 416, or otherwise). The calculations made by AM&V layer 412 can be based on building system energy models and/or equipment models for individual BMS devices or subsystems. For example, AM&V layer 412 can compare a model-predicted output with an actual output from building subsystems 428 to determine an accuracy of the model.

Fault detection and diagnostics (FDD) layer 416 can be configured to provide on-going fault detection for building subsystems 428, building subsystem devices (i.e., building equipment), and control algorithms used by demand response layer 414 and integrated control layer 418. FDD layer 416 can receive data inputs from integrated control layer 418, directly from one or more building subsystems or devices, or from another data source. FDD layer 416 can automatically diagnose and respond to detected faults. The responses to detected or diagnosed faults can include providing an alert message to a user, a maintenance scheduling system, or a control algorithm configured to attempt to repair the fault or to work-around the fault.

FDD layer 416 can be configured to output a specific identification of the faulty component or cause of the fault (e.g., loose damper linkage) using detailed subsystem inputs available at building subsystem integration layer 420. In other example embodiments, FDD layer 416 is configured to provide "fault" events to integrated control layer 418 which executes control strategies and policies in response to the received fault events. According to an example embodiment, FDD layer 416 (or a policy executed by an integrated control engine or business rules engine) can shut-down systems or direct control activities around faulty devices or systems to reduce energy waste, extend equipment life, or assure proper control response.

FDD layer 416 can be configured to store or access a variety of different system data stores (or data points for live data). FDD layer 416 can use some content of the data stores to identify faults at the equipment level (e.g., specific chiller, specific AHU, specific terminal unit, etc.) and other content to identify faults at component or subsystem levels. For example, building subsystems 428 can generate temporal (i.e., time-series) data indicating the performance of BMS 400 and the various components thereof. The data generated by building subsystems 428 can include measured or calculated values that exhibit statistical characteristics and provide information about how the corresponding system or process (e.g., a temperature control process, a flow control process, etc.) is performing in terms of error from its setpoint. These processes can be examined by FDD layer 416 to expose when the system begins to degrade in performance and alert a user to repair the fault before it becomes more severe.

### Communication System with Modular Architecture

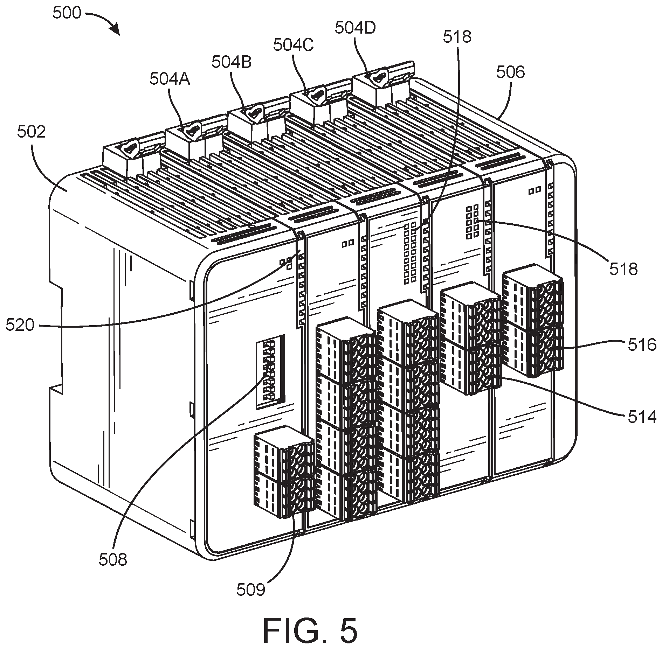

Referring now to FIG. 5, a communication system 500 for use in a BMS (e.g., in FIG. 1) is implemented using a modular architecture in some embodiments. Communication system 500 can be controller 366 (FIG. 4) or any other type of controller in building 10 or can be a communication unit for network 446 or any of building subsystems 428 and devices and networks associated therewith (FIG. 4). For example, communication system 500 can be employed with or communicate with a valve controller, a damper controller and AHU controller, an RTU controller, a thermostat, a fan speed controller, a compressor controller, combinations thereof, or any device for controlling equipment or communicating with equipment in HVAC system 100 (FIGS 1).

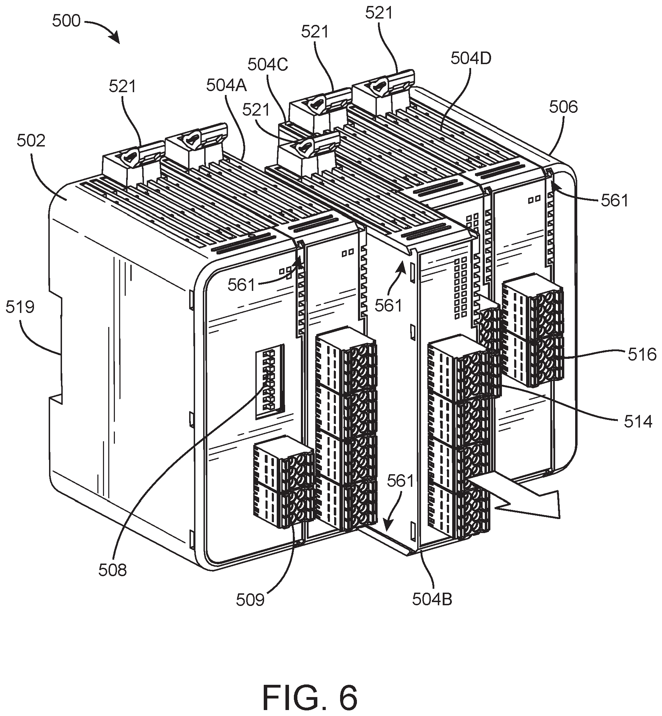

In some embodiments, communication system 500 includes a base module, or communication module 502, at least one module 504A-D, and an end cap 506. Modules 504A-D are IOMs in some embodiments. In some embodiments, a number of modules 504A-D installed with communication module 502 or end cap 506 can be slidably engaged with each other. (See Fig. 6 where module 504B is slidably connected between modules 504A and 504C). The slidable connection can use a hook and groove interface 561. Modules 502 and 504A-D can be configured as a smart modules including processing and communication circuits in some embodiments. In some embodiments, modules 504A-D have a housing that interfaces or integrates with the housing for communication module 502 and end cap 506 when modules 504A-D are plugged into each other so that a unified housing is provided for communication system 500. If a module 504A-D is not provided, a blank or dummy housing component can be provided to protect the interface and to provide an integrated housing appearance in some embodiments.

Communication module 502 includes a processor, memory and components for performing communication operations including wired communication operations. Communication module 502 includes a connector 509 (e.g., a hot plug connector) for connecting to the module 504. Communication module 502 can include serial ports and communication interfaces for communication with various other devices, systems, and networks. Communication module 502 can house a microcontroller unit (MCU), a system on a chip (SOC), or generally any type of circuit such as an integrated circuit (IC), an application-specific integrated circuit (ASIC), a daughterboard, or a field-programmable gate array (FPGA). communication module 502 may also be a larger device or may be a circuit or chip installed in or connected to a larger device. Further, communication module 502 may connect to existing devices such as a central processing unit (CPU) of a sensor or actuator or may replace processing circuits of existing devices.

Module 502 includes DIP switches 508 for setting various parameters (e.g., addressing). Module 502 can also include a connector for providing a physical or magnetic connection. Data and power communication can occur through connector 509 in some embodiments. Connector 509 is a hot plug connector in some embodiments. Module 502 also includes indicators 520

Module 502 and modules 504A-D can house various hardware components and interfaces that may be provided with system 500. The components can include a wireless communications module, a wired communications module, a universal serial bus (USB) module, an RS-485 interface, a Bluetooth module, expandable input/output (I/O) points, and an expandable memory (e.g., SD-RAM). Other types of modular hardware components are possible and contemplated. Generally, module 502 allows communication system 500 to be customized for a variety of different applications. Using fixed and/or modular hardware components, communication system 500 can communicate with edge and legacy devices, cloud applications, external memory, and a Wi-Fi transceiver in some embodiments.

In some embodiments, modules 504A-D are terminal devices and can include terminal block 512, terminal block 514, and indicators 518. Module 502 can include similar components. Indicators 518 can be a liquid crystal display (LCD), lamps, or an LED (red, green and blue) or other lights. In some embodiments, indicators 518 can include lights, a microphone, speaker or a buzzer for audio communication. Indicators 518 and terminal blocks 512 and 514 can be specific to certain applications, interfaces or protocols. In some embodiments, communication module 502 communicates with terminal block 514 and 516 via connectors between modules 502 and 504A-D (e.g., on main planar sides). Power for module 504 can be provided via the connector 509 or main planar side connections.

Terminal blocks 514 and 516 are mechanical connectors. In some embodiments, terminal blocks 512 and 514 have a specific configuration and number of connections for particular applications (e.g., associated with the IOM). Terminal blocks 514 and 516 can be modular insulated housing structures with terminals for receiving wires or connections having a variety of pitches and pole numbers. Terminal blocks 514 and 516 can be a printed circuit board mount, a barrier strip, a feed through terminal block, or other connective structure. In some embodiments, terminal blocks 514 and 516 provide different I/O types combined for modularity (e.g., UI - 4-20mA, 0-10V, RTD, dry contact BI and UO - AO (4-20mA, 0-10V), BO (triac, FET), (SS) RO, wet contact BI). Terminal blocks 514 and 516 can each be a set of four terminal blocks including fixed points or input output interfaces for communication system 500. Terminal blocks 514 and 516 can be configured to provide the appropriate interface for the signals associated with the application of the IOM.

In some embodiments, communication system 500 can be attached to a DIN rail at an interface 519. Latches 521 can be used to selectively secure modules 502 and 504 to the DIN rail at interface 519. In some embodiments, communication system 500 also includes one or more additional modules such as a module embodied as a DIN rail mounted controller in some embodiments.

The architectural design of system 500 allows customers to select only hardware components desired for a specific application without forcing customers to purchase hardware that is not necessary in some embodiments. Moreover, customers can remove any of modules 504A-D if desired. The modular design also allows customers to easily replace a failed component in the field instead of removing the component for servicing or purchasing an entirely new part in some embodiments. In some embodiments, a processor board might have inadequate millions of instructions per second (MIPS) or memory capability and could be replaced with a faster processor or one with more memory. The existing modules 504A-D can remain intact, potentially saving wiring and commissioning time and cost, in addition to saving cost associated with preserving the existing boards in the system.

In some embodiments, modules 504A-D allow dynamic factory and field configuration of point counts and types. The modules 504A-D are hot-pluggable/swappable and are automatically identified/addressed by the main processor (e.g., by processors using multi-master with address arbitration) or manually addressed via switches or NFC. In some embodiments, each of modules 504A-D is serialized and has a unique address (e.g., processor or EEPROM on an internal serial bus with unique identifier), which is readable by the processor to determine the I/O point mix that is installed in the overall system. In some embodiments addressing is accomplished by use of a split serial bus. In some embodiments, only one processor board is used in system 500 and, and all IOMs pass a serial signal through a processor onto the next module.

In some embodiments, communication system 500 utilizes an addressing scheme where modules 504A-D do not include manual setting of addresses. In some embodiments, a pulse width modulated (PWM) signal is provided from module 502 to module 504A at a first frequency. A PWM signal at a second frequency (e.g., twice the first frequency) is provided from module 504A to module 504B. A PWM signal at a third frequency (e.g., three times the first frequency) is provided from module 504B to module 504C. A PWM signal at a fourth frequency (e.g., four times the first frequency) is provided from module 504C to module 504D. This signal scheme can continue for any number of modules. The frequency of the PWM signal indicates an address for the module 504A-D.

The address can be prestored on modules 504A-D in some embodiments. The addresses can be loaded via software, via near field communication, Bluetooth, etc. The PWM signals can be provided at device start up, reset, or when a new module is installed in some embodiments. Although certain frequencies are described herein, various frequencies can be utilized. Frequency multiples are not necessarily required; other frequency keying schemes can be utilized. The address can be for any network scheme including but not limited to Ethernet, RS 485, DeviceNet, ControlNet, Modbus, Zigbee, BACNet, etc. Once addressing is achieved, other configuration data can be sent and received via network communications using the addresses.

Indicators 518 and 520 provide a user indication of status and/or terminal position. Indications are used for fault and/or I/O status (i.e., wiring fault, out-of-range input, active output, etc.) in some embodiments. Each modules 504A-D is self-encapsulated for environmental protection and safe handling in the field in some embodiments. In addition, the connections between modules 504A-D and module 502 can be keyed (disallowed in certain positions) and/or physically secured with additional hardware for a robust design. Indicators 518 and 520 can indicate network communication status in some embodiments.

Modules 504A-D can be configured for various point types including but not limited to a universal input (UI), a binary input (BI), an analog output (AO), a binary output (BO), a universal output (UO), configurable output (CO), a relay output, and combinations thereof. Point types used by controller model numbers MS-IOM-1711, MS-IOM-2711, MS-IOM-3711, and MS-IOM-4711 manufactured for Johnson Controls International can be used in system 500. In some embodiments, the UI accepts an analog input, voltage mode 0-10 VDC signal, an analog input, current mode 4-20ma signal, an analog input, resistive mode 0-2 Kilo Ohm signal (e.g., for Resistance Temperature Detector (RTD)), and a binary input, dry contact maintained mode signal. In some embodiments, the BI accepts a pulse counter mode (high speed), 100 Hz signal and a binary input, dry contact maintained mode signal. In some embodiments, the AO provides an analog output, voltage mode 0-10 VDC signal, and an analog output, current mode 4-20ma signal. In some embodiments, the BO provides a 24 VAC triac signal. In some embodiments, the UO provides an analog output, voltage mode 0-10 VDC signal, an analog output, current mode 4-20ma signal, and a binary output mode, 24 V AC/DC FET signal. In some embodiments, the CO provides a 24 VAC triac signal. In some embodiments, the UO provides an analog output, voltage mode 0-10 VDC signal, and a binary output mode, 24 VAC triac signal. In some embodiments, the relay output provides 120/240 VAC signal. Additional point types and combinations can also be utilized.

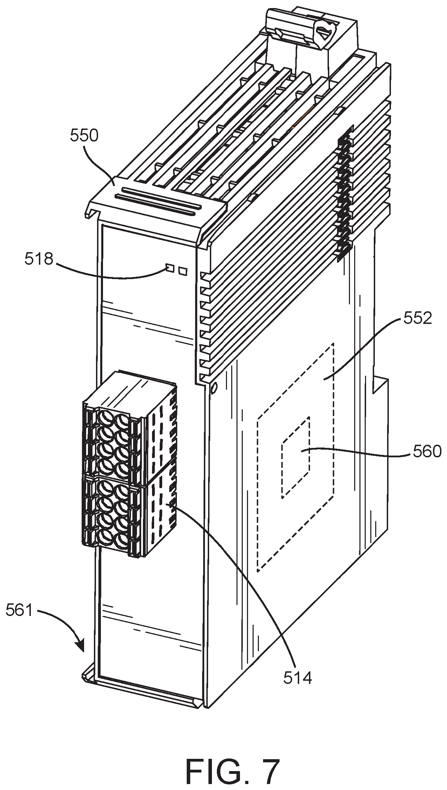

With reference to FIG. 7, a module 550 can be used as one of modules 504A-D and is configured for use as a module capable of providing and/or receiving the PWM signal via a circuit 552. Circuit 552 includes a processor 560 that is configured to identify frequency of the PWM and determine information (address information) indicated by the PWM signal. The address is an IOM address that is determined based on the frequency of the input PWM (Pulse Width Modulation) received by processor 560 in some embodiments. When the module 502 (FIG. 5) provides a 1 kilohertz (kHz) PWM signal, processor 560 in module 504A uses the 1 KHz signal to assign the address of module 504A. Processor 560 of module 504A provides a PWM signal at a frequency twice (or other relationship to) the frequency of the PWM signal received by module 504A which is used by module 504B to determine its address in some embodiments. Processor 560 of module 504B provides a PWM signal at a frequency three times (or other relationship to) the frequency of the PWM signal received by module 504A which is used by module 504C to determine its address. Processor 560 of module 504C provides a PWM signal at a frequency four times (or other relationship to) the frequency of the PWM signal received by module 504A which is used by module 504D to determine its address in some embodiments. In some embodiments, up to ten IOMS can be assigned addresses according to this technique.

The PWM signals provided by module 502 and modules 504A-D can be provided according to a proprietary or private protocol and can include additional information modulated on the signal in some embodiments. Processor 560 includes a frequency counter, filters, or other circuitry for determine signal frequency as well as a frequency signal generator circuit for providing signals at the next frequency. The PWM signals can be square wave signals in the kilohertz (kHz) range in some embodiments.

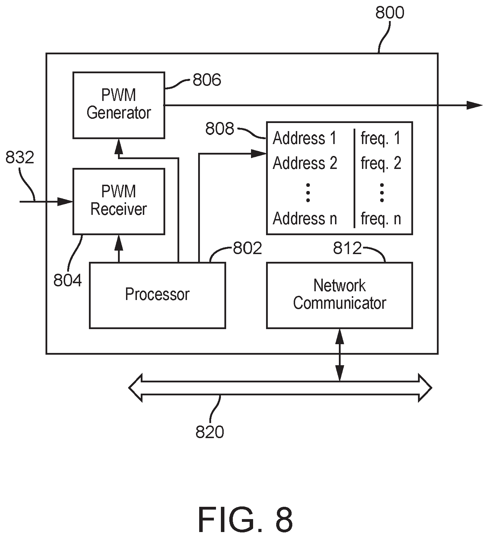

With reference to FIG. 8, a circuit 800 can be used as circuit 552 (FIG. 7). Circuit 800 can be included in any of modules 504A-D and module 502. Module 502 can include an IO manager that configures module 502 for addressing and other communication parameters. The IO manager can monitor communication module 502, IO input and output values, and support firmware upgrades in some embodiments.

Circuit 800 includes a processor 802, a PWM signal generator 806, a PWM signal receiver 804, a storage or memory 808, and a network communication module 812. Network communication module 812 communicates on network bus 820 which can be any type of network bus including but not limited to I²C, CAN, Modbus, RS 485, BACNet, MSTP, Ethernet, DeviceNet, ControlNet, and Zigbee busses. In some embodiments, network communication module 812 can be a wireless network communication module. Module 812 can include physical and media access layers for network communications.

PWM signal receiver 804 is configured to receive a PWM signal on a signal line 832. The PWM signal is analyzed to determine its frequency by processor 802. The determined frequency is used to select an address for the module using memory 808. Memory 808 stores an address for each frequency. Memory 808 can be preloaded at manufacture, can be loaded via software, wired connection, NFC, etc. The address can be provided by processor 802 to network communication module 812 in some embodiments.

Memory 808 (e.g., memory, memory unit, storage device, etc.) can include one or more devices (e.g., RAM, ROM, Flash memory, hard disk storage, etc.) for storing data and/or computer code for completing or facilitating the various addressing, processes, layers and modules (e.g., by processor 802 and module 812) described in the present application. Memory 808 can be or include volatile memory or non-volatile memory. According to some embodiments, memory 808 is communicably connected to processor 802 and includes address storage referenced to a frequency key scheme and computer code for executing one or more processes and communicating as described herein.

Processor 802 can be implemented as a general purpose processor, an application specific integrated circuit (ASIC), one or more field programmable gate arrays (FPGAs), a group of processing components, or other suitable electronic processing components. Processor 802 can include a PWM modulator/demodulator and other circuitry for processing and conditioning the PWM signal and determining its frequency. Processor 802 can utilize frequency counters, filters, and oscillators to determine frequency.

In some embodiments, processor 802 can be configured to determine a duty cycle of the PWM signal and the address can be stored according to duty cycle. Processor 802 can provide the next duty cycle signal in a duty cycle keyed protocol as opposed to a frequency keyed protocol in some embodiments. Processor 802 can utilize an astable timer, counter or other circuitry to determine duty Cyle.

PWM signal generator 806 is configured to generate a PWM signal at a frequency directed by processor 802. The signal can be generated in response to receiving the PWM signal at signal line 832 and can be provided on signal line 843. The frequency can be chosen based upon the frequency of the received PWM signal. A table in memory 808 can be used to select the frequency for provision by generator 806. Generator 806 can use counters, oscillators, timers, or other signal generation circuitry and software to provide the PWM signal.

PWM signal receiver 804 is configured to receive a PWM signal at a frequency at signal line 832. The signal at the signal line 832 can be provided by module 502 or modules 504A-D (FIG. 5). Receiver 804 can include circuitry for conditioning the signal for analysis by processor 802 and indicating that the signal is present in some embodiments.

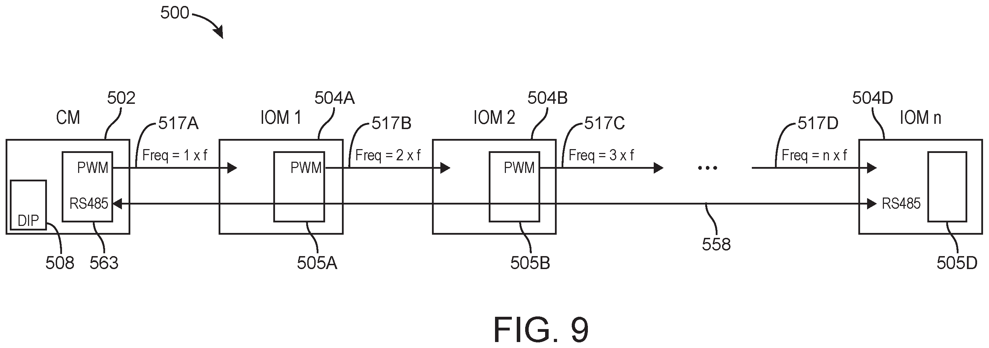

With reference to FIG. 9, a communication system 500B, similar to system 500 (FIG. 5), can auto assign addresses using signal lines 517A-D. Module 502 and modules 504A-D are also coupled by a communication bus 558 (e.g., an RS485 pass through bus) and can include circuit 800 (FIG. 8) in some embodiments. Modules 504A-D include respective PWM circuits 505A-D configured to provide addressing in response to the PWM signals on respective lines 517A-D. Module 502 includes a similar PWM circuit 563 configured to provide the first PWM signal on lines 517A. The address of module 502 can be set by switches 508 in some embodiments.

Circuits 505A-D and 561 can include PWM signal generators and frequency multipliers for providing the appropriate PWM signal. In some embodiments, a first pulse width modulated (PWM) signal is provided from module 502 to module 504A at a first frequency on line 517A. A second PWM signal at a second frequency (e.g., twice the first frequency) is provided from 504A on line 517B to module 504B. Module 504A determines its address from the first PWM signal being at the first frequency and provides the second PWM signal on line 517B in response to the first PWM signal A third PWM signal at a third frequency (e.g., three times the first frequency) is provided from 504B to module 504C on line 517C in response to the second PWM signal. A fourth PWM signal at a fourth frequency (e.g., four times the first frequency) is provided from module 504C to module 504D on line 517D. This signal scheme can continue for any number of modules. The frequency of the PWM signal indicates the address for each respective module 504A-D.

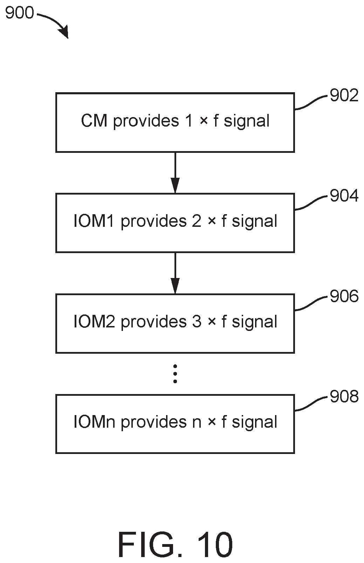

With reference to FIG. 10, a flow 900 shows operations for communication systems 500 and 500B (FIGS. 5 and 9). Flow 900 can set addresses for modules 504A-D for operation on an RS485 bus. In an operation 902, module 502 provides a first PWM signal at a frequency of 1xf. The frequency f can be 1KHz in some embodiments. Operation 902 can be initiated at start up, upon system installation, reset, or upon removal or installation of module 504A-D.

At an operation 904, module 504A receives the PWM signal at 1xf. Module 504A determines the frequency at 1xf and assigns its address according to the frequency. Module 504A also provides a PWM signal at a frequency of 2xf in response to the PWM signal at 1xf. At an operation 906, module 504B receives the PWM signal at 2xf. Module 504B determines the frequency at 2xf and assigns its address according to the frequency. Module 504B also provides a PWM signal at a frequency of 3xf in response to the PWM signal at 2xf.

Similar operations can continue until an operation 908. At operation 908, module 504N receives the PWM signal at Nxf, where N is the number of the last module. Module 504N determines the frequency at (N)xf and assigns its address according to the frequency. Module 504N can also provide a PWM signal at a frequency of (N+1)xf in response to the PWM signal at Nxf. If module 504N is the last module, another module will not receive the PWM signal at a frequency of (N+1)xf and flow 900 is complete.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also, two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims.

Embodiment 1: An interface module for a communication system in a building system, the interface module for removable connection to a base device, the interface module characterized by a circuit configured to provide an address for the interface module, wherein the circuit is configured to receive a first signal and provide the address in response to a characteristic of the first signal.

Embodiment 2: The interface module of embodiment 1, further characterized in that the interface module can be coupled to a second module, the interface module being installable on and removable from the second module, the second module comprising a second module interface for communicating via the interface module, wherein the interface module provides a second signal to the second module, the second signal indicating an address for the second module.

Embodiment 3: The interface module of embodiment 2, further characterized in that the interface module can communicate with a third module installable on and removable from the second module, wherein the second module provides a third signal to the third module, the third signal indicating an address for the third module.

Embodiment 4: The interface module of any of the above embodiments, further characterized in that the characteristic comprises frequency.

Embodiment 5: The interface module of any of the above embodiments, further characterized in that the characteristic comprises duty cycle.

Embodiment 6: The interface module of any of the above embodiments, further characterized in that the first signal is a pulse width modulated signal in the 1-10 kilohertz range.

Embodiment 7: The interface module of any of the above embodiments, further characterized in that the circuit comprises a memory storing the address with respect to the characteristic.

Embodiment 8: The interface module of any of the above embodiments, further characterized in that the circuit comprises a signal generator for generating a second signal for indicating an address of a second module in response to receiving the first signal.

Embodiment 9: A method for use in a building management system (BMS), the method characterized by receiving power and ground signals by an interface module for removable connection to a base device from the base device; and receiving a first signal by the interface module; and assigning an address by the interface module for the interface module in response to a characteristic of the first signal.

Embodiment 10: The method of embodiment 9, further characterized by providing a second signal from the interface module to a second module for removable connection to the interface module in response to the first signal; assigning an address by the second module for the second module in response to a characteristic of the second signal; providing a third signal from the second module to a third interface module for removable connection to the second module in response to the second signal; and assigning an address by the third module for the third module in response to a characteristic of the third signal.

Embodiment 11: The method of embodiment 9 or 10, wherein the first signal is a pulse width modulated signal in the 1-10 kilohertz range.

Embodiment 12: The method of any of embodiments 9 to 11, wherein the characteristic of the first signal comprises duty cycle.

Embodiment 13: The method of any of embodiments 9 to 12, wherein the characteristic of the first signal comprises frequency.

## Claims

1. An interface module for a communication system in a building system, the interface module for removable connection to a base device, the interface module **characterized by**:
a circuit configured to provide an address for the interface module, wherein the circuit is configured to receive a first signal and provide the address in response to a characteristic of the first signal.

2. The interface module of claim 1, further **characterized in that** the interface module can be coupled to a second module, the interface module being installable on and removable from the second module, the second module comprising a second module interface for communicating via the interface module, wherein the interface module provides a second signal to the second module, the second signal indicating an address for the second module.

3. The interface module of claim 2, further **characterized in that** the interface module can communicate with a third module installable on and removable from the second module, wherein the second module provides a third signal to the third module, the third signal indicating an address for the third module.

4. The interface module of any of the preceding claims, further **characterized in that** the characteristic comprises frequency.

5. The interface module of any of the preceding claims, further **characterized in that** the characteristic comprises duty cycle.

6. The interface module of any of the preceding claims, further **characterized in that** the first signal is a pulse width modulated signal in the 1-10 kilohertz range.

7. The interface module of any of the preceding claims, further **characterized in that** the circuit comprises a memory storing the address with respect to the characteristic.

8. The interface module of any of the preceding claims, further **characterized in that** the circuit comprises a signal generator for generating a second signal for indicating an address of a second module in response to receiving the first signal.

9. A method for use in a building management system (BMS), the method **characterized by**:
receiving power and ground signals by an interface module for removable connection to a base device from the base device; and
receiving a first signal by the interface module; and
assigning an address by the interface module for the interface module in response to a characteristic of the first signal.

10. The method of claim 9, further **characterized by**:
providing a second signal from the interface module to a second module for removable connection to the interface module in response to the first signal;
assigning an address by the second module for the second module in response to a characteristic of the second signal;
providing a third signal from the second module to a third interface module for removable connection to the second module in response to the second signal; and
assigning an address by the third module for the third module in response to a characteristic of the third signal.

11. The method of claim 9 or 10, wherein the first signal is a pulse width modulated signal in the 1-10 kilohertz range.

12. The method of any of claims 9 to 11, wherein the characteristic of the first signal comprises duty cycle.

13. The method of any of claims 9 to 12, wherein the characteristic of the first signal comprises frequency.
